# EUROPÄISCHE PATENTSCHRIFT

(11) **EP 1 568 861 B1**
(45) Veröffentlichungstag und Bekanntmachung des Hinweises auf die Patenterteilung: **18.01.2012**
(21) Anmeldenummer: 05002437.1
(22) Anmeldetag: 04.02.2005
(51) Int. Cl.: F01M 13/04

(54) **Einrichtung zur Abscheidung von Öl aus Blow-By-Gasen von Verbrennungsmotoren**
Blow-by-gas oil separator for combustion engine
Séparateur d'huile pour les gaz de carter d'un moteur à combustion

(30) Priorität: 06.02.2004 DE 102004006082
(43) Veröffentlichungstag der Anmeldung: 31.08.2005
(73) Patentinhaber: Polytec Riesselmann GmbH & Co. KG, 49393 Lohne (DE)
(72) Erfinder: Janssen, Hans, 49413 Dinklage (DE)
(74) Vertreter: von Kreisler Selting Werner

(56) Entgegenhaltungen:
- EP-A1- 0 730 086
- DE-A1- 19 707 597
- DE-A1- 19 912 271
- US-A1- 2003 221 398

## Beschreibung

Die Erfindung bezieht sich auf eine Einrichtung zur Abscheldung von Öl aus Blow-By-Gasen von Verbrennungsmotoren mittels mehrer parallel geschalteter Zyklone.

Zylinderkurbelgehäuse von Verbrennungsmotoren sind in an sich bekannter Weise mit einer Zyllnderkurbelgehäuse-Entlüftung ausgerüstet, die einen Ölabscheider aufweist. Die im Zylinderkurbelgehäuse vorhandenen Gase resultieren aus sogenannten Blow-By-Gasen, die zwischen Zylinderlaufwand und Kolben hindurchtreten und mit Öltropfen belastet sind. Um den Ölverbrauch zu reduzieren und eine saubere Verbrennung zu gewährleisten, ist es entsprechend den geltenden Emissionsvorschriften erforderlich, die anfallenden Blow-By-Gase vom Öl zu befreien. Zur Ölabscheldung werden bevorzugt Zyklone eingesetzt.

Zyklone besitzen eine Kennlinie, die mit steigendem Volumenstrom einen zunehmenden Druckverlust zur Folge hat. Steigt der Druckwiderstand des Zyklons an, so besteht die Gefahr, dass sich im Zylinderkurbelgehäuse ein Überdruck aufbaut. Dieser kann dazu führen, dass Kurbetwellringe abblasen und außerdem im Zyklon abgeschiedenes Öl nicht mehr In den Motor gelangt und es zu einem sogenannten "Ölreißen" kommt, d.h. Öl wird vom Blow-By-Gas mitgerissen und tritt aus dem Motor aus.

Bedingt durch die unterschiedlichen Lastzustände des Motors im Betriebsverhalten und dem jeweiligen Verschleißzustand des Motors kommt es zu laufenden Durchsatz-änderungen an Blow-By-Gasen. Ein wesentliches Kriterlum für den Einsatz eines Zyklons ist die erzielbare Abscheldewirkung bei unterschiedlichen Durchsätzen.

Zur Optimierung des Abscheidegrades sind bereits Einrichtungen mit mehreren Zyklonen bekannt.

In der DE 19912 271 A1 ist ein Ölabscheider beschrieben, bei dem anstelle eines einzelnen Zyklons mehrere parallelgeschaltete kleinere Zyklone, vorzugsweise vier, vorgesehen sind, die zu einem einteiligen kompakten Haupt-Bautell zusammengefasst sind. Das aus dem Kurbelgehäuse der Brennkraftmaschine ankommende ölbeladene Gas wird in einem flacher und breiter werdenden Hauptstromkanal auf die vier Zyklone verteilt und tangential In diese eingeleitet. Das gereinigte Gas gelangt aus den einzelnen Zyklonen über einen am oberen Ende angeordneten Gasauslaß (Tauchrohr) In eine Sammelhaube und von dieser In den Luftansaugtrakt der Brennkraftmaschine.

Das in den einzeinen Zyklonen abgeschiedene Öl tritt am unteren Ende des konlschen Abschnittes des jeweiligen Zyklons zentrisch aus und wird in einem Sammelraum gesammelt und in den Ölsumpf der Brennkraftmaschine abgeführt.

Eine in ihrem Aufbau ähnliche Einrichtung für drei Zyklone ist aus der DE 299 08 116 U1 bekannt. An der Innenwandung der die Tauchrohre aller drei Zyklone überdeckenden Haube wird noch zusätzlich abgeschiedenes Öl über einen Ölablaufkanal in den Sammelraum abgeführt, wobei das in den Sammelraum ragende Ende des Ölablaufkanals als Siphon ausgebildet ist.

Die beiden vorgenannten Ölabscheider besitzen einen relativ komplizierten Aufbau. Der zugeführte Gasstrom wird immer gleichmäßig auf die vorhandene Anzahl an Zyklonen aufgeteilt. Fallen in Abhängigkeit vom Belastungszustand der Brennkraftmaschine nur kleine Volumenströme an, so wird keine gute Abscheidung erreicht. Weiterhin ist eine Nebelabscheidevorrichtung (DE 199 51 312 A1) bekannt, die ein Gehäuse umfasst, dass die Aufnahme von zwei oder mehreren Zyklonen ermöglicht, die parallel oder in Reihe geschaltet, durchströmt werden können. Das Gehäuse ist z.B. in drei Kammern unterteilt, wobei in der zentralen Kammer die Einzelzyklone angeordnet sind, eine weitere Kammer ist zur Aufnahme eines Vorabscheiders bestimmt und die dritte Kammer ist zur Aufnahme eines Feinabschelders vorgesehen. Der zu reinigende Nebel gelangt in den Vorabscheider und von diesem aus in die Einzelzyklone und abschließend in den Feinabschelder.

Diese Vorrichtung ist in ihrer Herstellung aufwendig und erfordert die Anordnung einer Vor- und einer Feinabscheidestufe.

Aus der DE 102 05 981 A1 ist eine Anordnung von mehreren, vorzugsweise parallel geschalteten, Zyklonen bekannt, deren tangentiale Einlassöffnungen einzeln zu verschließen oder zu öffnen sind, vorzugsweise mittels eines gemeinsamen Schiebers. Mit zunehmendem Durchsatz können sukzessive einzeine Zyklone zugeschaltet werden. Bei sich laufend verändernden Lastzuständen des Motors ist eine ständige Bewegung des Schiebers erforderlich, Während der Bewegung des Schiebers erfolgen die Freigabe und das Schließen der Einlassöffnungen in Abhängigkeit von der Bewegungsgeschwindigkeit des Schiebers.

Da die Tauchrohre der einzelnen Zyklone offen sind, besteht die Gefahr, dass im Betriebszustand im Bereich der Ölauslassöffnungen der Zyklone ein hoher Unterdruck entsteht, durch den die Ölabführung erschwert wird.

Der Erfindung liegt die Aufgabe zugrunde, eine Einrichtung zur Abscheidung von Öl aus Blow-By-Gasen von Verbrennungsmotoren mittels mehren parallel geschalteten Zyklone zu schaffen, die eine Verbesserung des Abscheideverhaltens in einem großen Volumenstrombereich ermöglicht.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 13.

Bei einer Anordnung von mehreren parallel geschalteten Zyklonen zur Abscheidung von Öl aus dem Blow-By-Gas ist das Tauchrohres mindestens eines Zyklons mit einem die Gasauslassöffnung abdeckenden, selbsttätigen Ventil ausgerüstet. Das unter definierter Vorspannung stehende Verschlusselement des Ventils wird in Abhängigkeit von der Druckdifferenz zwischen dem an seiner Unter- und Oberseite anliegenden Druck in eine Öffnungs- und Schließstellung bewegt. Mit zunehmender Druckdifferenz gibt das Verschlusselement die Gasauslassöffnung zumindest über einen Öffnungsspalt frei und schaltet den Zyklon zu. Nimmt die Druckdifferenz ab, so verringert sich der Öffnungsspalt bis das Verschlusselement die Gasauslassöffnung wieder vollständig abdeckt. Bei Erreichen der Schließstellung des Verschlusselementes wird der Zyklon abgeschaltet.

Entsprechend der Anzahl der vorgesehenen Zyklone ergeben sich verschiedene Variationsmöglichkeiten.

So können die Tauchrohre aller Zyklone mit einem Ventil ausgerüstet werden, wobei das Verschlusselement des Ventils mindestens eines Zyklons mit einer Vorspannung belastet ist, die geringer ist, als die der einzelnen anderen Zyklone. Der Zyklon, dessen Verschlusselement mit der geringsten Vorspannung belastet ist, wird als erster in Betrieb genommen. Dieser ist so ausgelegt, dass bereits bei Zuführung eines kleinen Volumenstromes an Rohgas der vom Öl befreite Reingasstrom aufgrund der im Zyklon herrschenden Druckverhältnisse das die Gasauslassöffnung abdeckende Verschlusselement um einen geringen Spalt öffnet und abströmt. Im Innenraum eines Zyklons herrscht ein Druckgefälle, der Druck an der Zyklonwandung ist am größten und nimmt in Richtung zur Längsmittelachse ab. Mit steigender Rohgasstrommenge bzw. steigendem Volumenstrom wird entsprechend der Auslegung des Zyklons ab einem bestimmten Druckverlust selbsttätig ein weiterer Zyklon zugeschaltet, nämlich der Zyklon, dessen Verschlusselement mit einer geringeren Vorspannung belastet ist, als die Verschlusselemente der noch vorhandenen Zyklone. Mit weiter steigendem Volumenstrom erhöht sich auch der Druckverlust und in analoger Weise werden dann selbsttätig weitere Zyklone zugeschaltet. Die einzelnen Zyklone einer Zyklonkolonne schalten sich selbsttätig in Abhängigkeit vom anliegenden Volumenstrom zu. Die Druckverlustkurve eines Zyklons, die sich aus der Druckdifferenz und dem Volumenstrom während des Betriebszustandes des Motors ergibt, und beim Einfachzyklon progressiv ansteigt, ändert sich aufgrund der erfindungsgemäßen Maßnahmen für die Zyklonkolonne und geht mit zunehmendem Volumenstrom in eine abgeflachte oder sogar degressiv verlaufende Kurve über. In der Praxis bedeutet dies, dass der Druckverlust über der Zyklonkolonne begrenzt wird und es zu keinem Überschreiten der zulässigen Druckverlustobergrenze kommt. Da die Druckverlustobergrenze die Abscheidewirkung eines Zyklons begrenzt, wird durch die vorgeschlagenen Maßnahmen im Vergleich zu einem Einzelzyklon eine wesentliche Verbesserung des Abscheidegrades erreicht.

Das bekannte Problem, dass bei Überschreiten der Druckverlustobergrenze die Öfrückführung über einen Siphon in ihrer Funktion beeinträchtigt wird, tritt bei der erfindungsgemäßen Zyklonkolonne nicht mehr auf.

Die Regulierung bzw. Steuerung der Gasauslassöffnung über ein Ventil bewirkt zusätzlich noch, dass die im Zyklon vorhandene Drallströmung im Bereich der Anordnung des Tauchrohres in eine Quellströmung umgewandelt wird, mit der Folge, dass der dynamische Druck des Gases in einen statischen Druck umgewandelt und dadurch der Druckverlust reduziert wird.

Gemäß einer weiteren Ausführungsvariante ist vorgesehen, dass lediglich ein Zyklon ohne Ventil ausgerüstet ist. Dieser Zyklon wird als erster in Betrieb genommen und mit steigendem Volumenstrom werden dann die weiteren Zyklone selbsttätig zugeschaltet, In Abhängigkeit von der jeweiligen Höhe der an den Verschlusselementen anliegenden Vorspannung.

Die Ventile sind vorzugsweise so ausgestaltet, dass die Verschlusselemente nur einen Öffnungsspalt freigeben. Dieser soll bei maximaler Druckdifferenz zwischen Oberseite und Unterseite des Verschlusselementes in einem Bereich von 10 bis 30% des Durchmessers der Tauchrohröffnung liegen. Durch einen engen Öffnungsspalt an der Gasauslassöffnung des Tauchrohres wird eine "scharfe" Gasumlenkung des Reingas-Stromes erzielt, die bereits bei geringem Volumenstrom an Rohgas zu einer Verbesserung der Ölabscheldewirkung führt.

Das Ventil kann als Klappenventil oder als einteiliges Federblechventil ausgebildet sein. Hinsichtlich weiterer Einzelheiten zu der Variante als Federblechventil wird auf die Ausführungen Im Ausführungsbeispiel verwiesen.

Bei einem Klappenventil greift zur Einstellung der erforderlichen Vorspannung der Klappe an dieser eine einseitig eingespannte Biegefeder an. Biegefeder und Klappe können als separate Bauteile ausgeführt sein. Eine einfache und kostengünstige Variante ist, beide als ein Bauteil auszubilden, das aus Federblech hergestellt wird. Durch unterschiedliche Materialdicken und/oder Längen der Biegefeder sowie der Vorblegung der Biegefeder in einem bestimmten Radius lassen sich Klappen mit verschiedenen Vorspannungen herstellen. Falls nur ein Zyklon mit einem Ventil ausgerüstet werden soll, so kann die erforderliche Vorspannung der Klappe auch durch Anordnung einer separaten Schenkelfeder erzielt werden. Durch die unterschiedlichen Vorspannungen der Verschlusselemente der einzelnen Zyklone ist es möglich, jeden Zyklon auf einen genauen Öffnungsschaltpunkt einzustellen. Die Zyklonkolonne kann dann genau auf das Betriebsverhalten des Motors abgestimmt werden und unter Berücksichtigung der anfallenden Volumenströme an Rohgas eine maximale Ölabscheldung sowohl unter Teil- als auch unter Vollastbetrieb des Motors gewährieisten.

Die Hebelarme bzw. Blegefedern der einzelnen Klappenventile einer Zyklonkolonne können In einer gemeinsamen Halterung eingespannt sein, die an der Abdeckung der Zyklone befestigt wird. Die Zyklone sind vorzugsweise unmittelbar aneinandergrenzend angeordnet. Die Klappen für die einzelnen Zyklone und deren Halterung können als eine Baueinheit ausgebildet sein. Die die Gasauslassöffnungen abdeckenden Klappen sind jedoch unabhängig voneinander bewegbar. Unterschiedliche Vorspannungen der einzelnen Klappen als Bestandteil einer Baueinheit lassen sich durch unterschiedliche Längen der Hebelarme realisieren.

Die Zyklonkolonne kann als eigenständiges Modul ausgebildet sein. Es besteht auch die Möglichkeit, dass die Zyklonkolonne integrierter Bestandteil der Zylinderkopfhaube des Motors ist. Die Zyklonkolonne oder die komplette Zylinderkopfhaube mit Ölabscheider können im Spritzgießverfahren aus Kunststoff hergestellt werden.

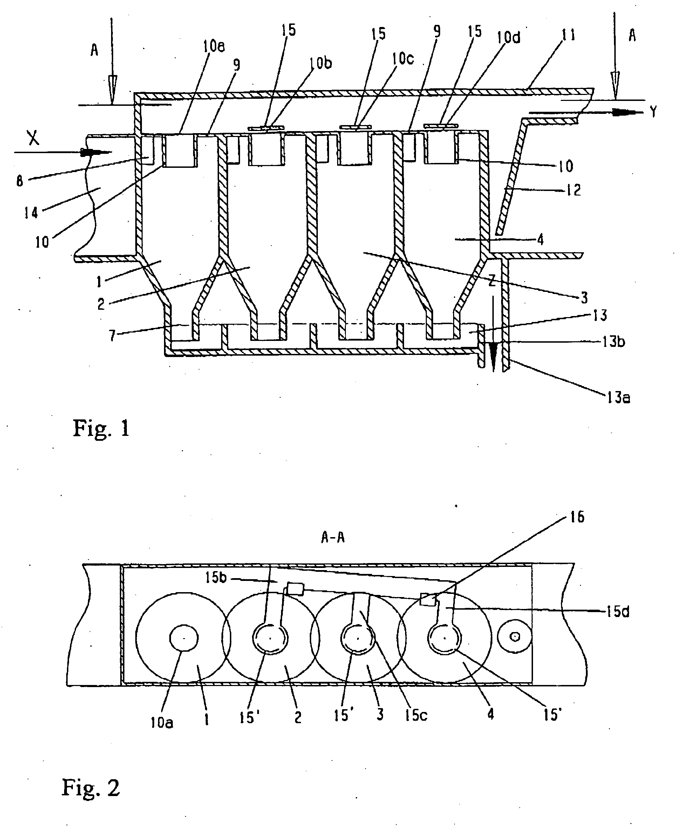

Die Erfindung soll nachstehend an einem Beispiel näher erläutert werden. In der zugehörigen Zeichnung zeigen
- Fig. 1: eine Anordnung mehrerer parallel geschalteter Zyklone als Längsschnitt,
- Fig. 2: einen Schnitt gemäß der Linie A-A in Fig. 1,
- Fig. 3: eine Tellansicht eines einzelen Zyklons mit einem Klappenventil in geschlossener Stellung als Längsschnitt,
- Fig. 4: den Zyklon gemäß Fig. 3 mit einem Klappenventil in geöffneter Stellung,
- Fig. 5: die Draufsicht auf den Zyklon gemäß Fig. 4,
- Fig. 6: eine weitere Ausführungsvariante des Ventils als einteiliges Federblechventil als Draufsicht,
- Fig. 7: das Ventil gemäß Fig. 6 im montierten Zustand als vereinfachte Schnittdarstellung und
- Fig. 8: eine Ausführungsvariante des Ventils gemäß Fig. 6 als Doppelventil als Draufsicht.

Die als Ölabscheider zur Abscheidung von Öl aus Blow-By-Gasen von Verbrennungsmotoren ausgeführte Zyklonbaugruppe bzw, -kolonne besteht aus vier parallel geschalteten Zyklonen 1, 2, 3 und 4. Es kann sich dabei um einzelne Zyklone handeln oder eine Baueinheit von vier Zyklonen. In an sich bekannter Bauweise bestehen die einzelnen, unmittelbar aneinandergereihten Zyklone 1, 2, 3 und 4 aus einem oberen, zylindrischen Gehäuseteil 5 mit einem sich nach unten trichterförmig anschließenden Gehäuseteil 6 mit einem zentrisch angeordneten Ablaufstutzen bzw. Austrittsöffnung 7 zum Abfließen des abgeschiedenen Öls. Jeder Zyklon besitzt im oberen Teil 5 eine tangential angeordnete Eintrittsöffnung 8 für den Eintritt des Blow-By-Gases, das nachfolgend auch als Rohgas bzw. Volumenstrom bezeichnet wird. Am oberen Ende des Zyklons Ist dieser durch eine Abdeckung 9 abgeschlossen. In die Abdeckung 9 ist zentrisch ein Tauchrohr 10 eingebunden, das bündig mit der Abdeckung 9 abschließt. Unmittelbar an die Abdeckung 9 schließt sich nach oben eine Sammelhaube 11 zur Abführung des gereinigten Rohgases an. Unmittelbar vor dem Anschlussstutzen der Sammelhaube 11 kann noch ein Hilfsraum 12 angeordnet sein, in den eventuell noch im Bereich der Sammelhaube 11 anfallende Ölreste abgeführt werden.

Unter den einzelnen Austrittsöffnungen 7 für die Ölrückführung befindet sich ein Sammelraum 13 zur Aufnahme des in den einzelnen Zyklonen 1, 2, 3 und 4 abgeschiedenen Öls, der einen geneigten Boden besitzt, mit einem an der tiefsten Stelle angeordneten Anschlussstutzen 13a. Dieser ist durch eine nach oben gerichtete Trennwand 13b als Siphon ausgebildet, damit sichergestellt ist, dass die einzelnen Ölahlaufstutzen 7, 7' der Zyklone 1, 2, 3 und 4 in das Öl eintauchen, damit die Austrittsöffnungen nicht direkt miteinander in Verbindung stehen.

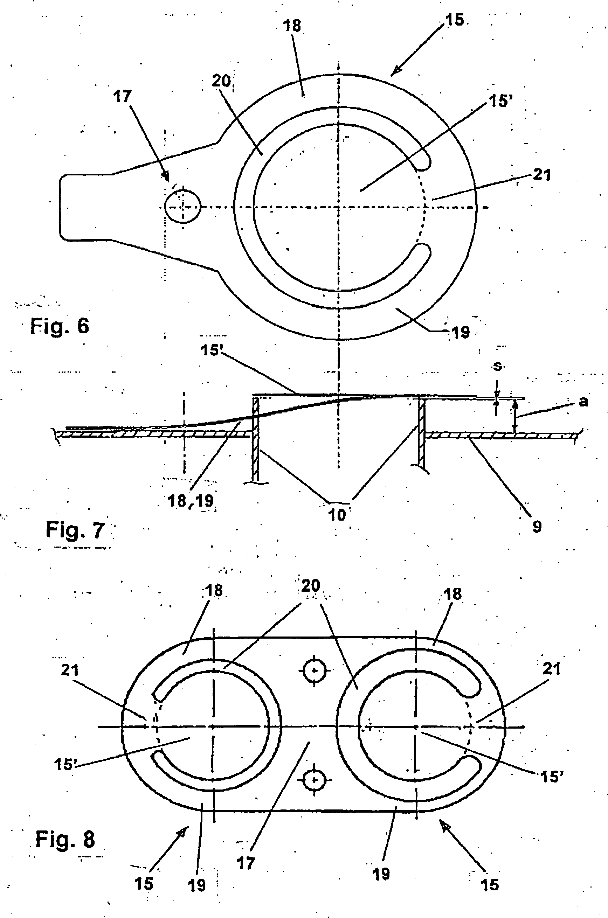

Die einzelnen Zyklone 1, 2, 3 und 4 stehen mit einem zentralen Rohgaszuführungskanal 14 In Verbindung. In dem gezeigten Beispiel sind die einzelnen Zyklone unmittelbar aneinander angrenzend in einer Reihe angeordnet. Es ist auch möglich die Zyklone in einer anderen Form anzuordnen. Der In der Reihenfolge an erster Stelle gezeigte Zyklon 1 ist ohne Ventil ausgerüstet, die Gasauslassöffnung 10a des Tauchrohres 10 ist offen. Dagegen sind die Gasauslassöffnungen 10b, 10c und 10d der Tauchrohre 10 der nachfolgenden Zyklone 2, 3 und 4 mittels eines Ventils 15 abgedeckt. Die drei Ventile 15 sind z.B. als Klappenventile oder als einteiliges Federblechventil (Fig. 6 bis 8) ausgebildet. Die Klappenventile 15 bestehen aus dem Verschlusselement bzw. der Klappe 15' und einem Hebelarm 15b bzw. 15c oder 15d. Die Ventile 15 sind identisch ausgebildet und unterscheiden sich nur in der Länge der

Hebelarme 15b, 15c, 15d, Die drei Klappenventile 15 bestehen aus Federblech und sind mit den breiten Endabschnitten der Hebelarme 15b, 15c, 15d In einer gemeinsamen Halterung bzw. Halteschiene 16 aus Kunststoff eingeclipst. Die Halterung 16 ist an der aus Kunststoff bestehenden Abdeckung 9 angespritzt.

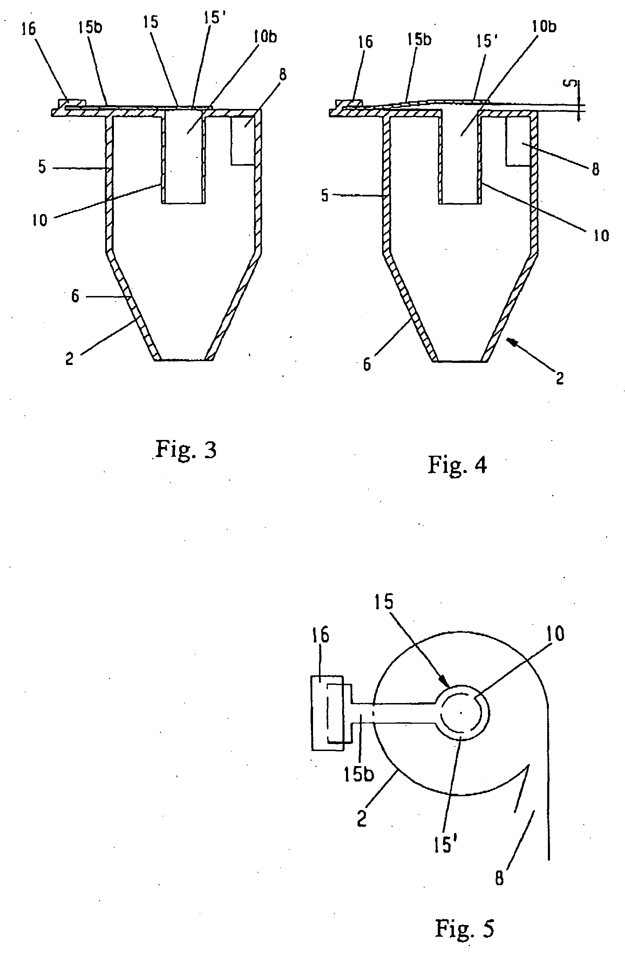

Die Anordnung der Klappenventile 15 ist in den Figuren 3 bis 5 gezeigt. Der Hebelarm 15b des Klappenventils 15 des an zweiter Stelle angeordneten Zyklons 2 ist länger als der des nachfolgenden Zyklons 3 an dritter Stelle. Der Hebelarm 15d des Klappenventils 15 des an vierter Stelle angeordneten Zyklons 4 ist kürzer als der Hebelarm 15c des Zyklons 3.

Durch die unterschiedlichen Hebellängen werden die Klappen 15 in der Reihenfolge der Zyklone 2 bis 4 jeweils mit einer höheren Vorspannung belastet.

Die Klappenventile 15 schließen die Gasauslassöffnungen 10b, 10c und 10d der Tauchrohre 10 dicht ab, wie In Fig. 3 gezeigt. Der erste Zyklon 1 (ohne Ventil) ist für einen geringen Volumenstrom ausgelegt. Das zugeführte Rohgas, gekennzeichnet mit dem Pfeil "x", strömt über die tangentialen Einströmöffnungen 8 in die einzelnen Zyklone 1 bis 4 ein und wird im Zyklon 1 in eine radlale Strömung versetzt, wobei durch die wirkenden Zentrifugalkräfte Öl an der Innenwandung des Zyklons abgeschieden wird. Das abgeschieden Öl wird in dem Sammelraum 13 gesammelt und nach Erreichen eines bestimmten Ölstandes über den siphonartigen den Ölablaufstutzen 13a,13b In der mit dem Pfeil "z" gekennzeichneten Richtung abgeführt. Das gereinigte Gas strömt In kleiner Menge durch die Gasauslassöffnung 10a in den durch die Sammelhaube 11abgedeckten Raum und wird in Pfeilrichtung "y" abgeführt. Durch den Druckverlust im Zyklon 1 regelt sich die Gasströmung. Nach Erreichen eines definierten Druckverlustes in dem ersten Zyklon 1 baut sich mit zunehmendem Volumenstrom in den nachfolgenden Zyklonen 2 bis 4 ein höherer Druck auf. Ist dieser höher als die Vorspannung des Klappenventils 15 des zweiten Zyklons 2, so öffnet sich dieses Klappenventil 15 selbsttätig (Öffnungsspalt s (Fig. 4)) und schaltet automatisch den zweiten Zyklon 2 zu. Dieser Vorgang setzt sich bei weiterer Zunahme des Volumenstromes fort, in analoger Weise werden die Zyklone 3 und 4 volumenstromabhängig zugeschaltet. Beim Übergang vom Vollast- In den Teillastbetrieb des Motors, also bei abnehmendem Volumenstrom, wird zuerst, infolge des abnehmenden Druckes der Zyklon 4 abgeschaltet und gegebenenfalls die weiteren Zyklone 3 und 2. Die selbsttätige volumenstromabhängige Zu- und Abschaltung der einzelnen Zyklone 2 bis 4 erfolgt ausschließlich durch die an dem jeweiligen Klappenventil anliegende Vorspannung. Ist z.B. die Vorspannung des Klappenventils 15 am Zyklon 3 größer als am Zyklon 4, so wird der Zyklon 4 in der zeitlichen Reihenfolge vor dem Zyklon 3 zugeschaltet.

Das Betriebsverhalten der Zyklonkolonne gewährleistet somit auch bei hohen Volumenströmen eine zuverlässige Arbeitsweise unterhalb der Druckverlustobergrenze und erreicht im Vergleich zu Einzelzyklonen einen deutlich verbesserten Abscheidegrad.

In den Figuren 6 bis 8 Ist eine weitere Ausführungsvariante für ein Ventil 15 zum Öffnen und Verschließen der Gasauslassöffnung des Tauchrohres 10 gezeigt.

In der Fig. 7 ist lediglich der obere Teil eines Zyklons mit der Abdeckung 9 und dem oberen Abschnitt des Tauchrohres 10 dargestellt.

Das Ventil 15 ist als einteiliges Federblechventil ausgebildet, das einen Befestigungsabschnitt 17 besitzt, an den sich zwei symmetrisch angeordnete Biegearme 18, 19 anschließen, die an der zum Befestigungsabschnitt 17 gegenüberliegenden Seite in die Verschlusslasche 15' übergehen. Die Verschlusslasche 15' wird durch eine umlaufende Trennfuge 20 gebildet, die an der zum Befestigungsabschnitt 17 gegenüberliegenden Seite durch eine blegesteife Verbindungsstelle 21 unterbrochen ist. Die Trennfuge 20 ist in Abhängigkeit vom angewendeten Trennverfahren, wie z.B. Stanzen oder Laserschneiden, als Spalt oder Trennschnitt ausgebildet. Der Befestigungsabschnitt 17 bildet die Einspannstelle für die beiden Blegearme.

Das Ventils 15 wird an der Abdeckung 9 eines Zyklons befestigt, wobei das Tauchrohr 10 die Abdeckung 9 um einen definierten Abstand a überragt. Durch die Höhe des Abstandes a wird die Vorspannung für die Biegearme 18, 19 bestimmt.

Die Biegearme 18, 19 werden während der Montage des Ventils 15 zum Teil mit einem positiven und einem negativen Biegemoment beaufschlagt. Ein Biegemoment ist "positiv", wenn an der Unterseite des Biegearmes Zug erzeugt wird, und "negativ", wenn an der Unterseite des Blegearmes Druck erzeugt wird.

Durch die aufgebrachten Blegemomente wird erreicht, dass die Verschlusslasche 15' im Betriebszustand, bei anliegendem Öffnungsdruck, eine nahezu parallele Bewegung in Bezug auf den Öffnungsrand des Tauchrohres 10 ausführt. Während der Öffnungs- und Schließbewegung der Verschlusslasche führen die beiden Biegearme 18, 19 eine synchrone Schwenkbewegung aus. Durch die nahezu parallele Abhebbewegung der Verschlusslasche 15' beim Öffnen des Ventils 15 wird somit ein gleichmäßiger Ringspalt s zum Abströmen des Gases freigegeben. Die Verschlusslasche 15' wird durch den anliegenden Öffnungsdruck keiner Schwenk oder Drehbewegung ausgesetzt. ist der Öffnungsdruck kleiner als der durch die Vorspannung erzeugte Anpressdruck der Verschlusslasche 15', so wird diese gleichmäßig fest gegen den Öffnungsrand des Tauchrohres 10 gedrückt, da die Wirkungslinie der Anpresskraft genau In der Mitte der Verschlusslasche 15' liegt. Die Verschlusslasche bewirkt somit eine gute Abdichtung der Öffnung.

Die Federcharakteristik des Ventils kann durch eine Veränderung der Breite der Blegearme und/oder der Blechdicke eingestellt werden.

Diese Ausführungsvariante zeichnet sich durch einen sehr einfachen Aufbau aus und lässt sich kostengünstig als Blochstanztell herstellen. Bedingt durch den extrem flachen Aufbau und die nahezu parallele Bewegung der Verschlusslasche erfordert es nur einen kleinen Einbauraum.

In der Fig. 8 ist dieses Ventil 15 in einer Ausführung als Mehrfachventil, z.B. Doppelventil, gezeigt. Das Doppelventil Ist zur Abdeckung der Öffnungen der Tauchrohre 10 zweier benachbarter Zyklone vorgesehen. In diesem Fall besitzen die Biegearme 18,19 zweier spiegelbildlich angeordneter Ventile 15 einen gemeinsamen, in der Mitte liegenden Befestigungsabschnitt 17. Durch eine unterschiedliche Breite der Blegearmpaare der Ventile kann die Öffnungscharakteristik der Ventile auf die in den Zyklonen herrschenden Druckverhältnisse abgestimmt werden, so dass einzelne Zyklone nacheinander zuschaltbar sind.

Das einteilige Federblechventil besitzt aufgrund der in der Mitte der Verschlusslasche wirkenden resultlerenden Anpresskraft und der nahezu parallelen Öffnungs- und Schließbewegung der Verschlusslasche eine sehr gute Öffnungs- und Schließcharakteristik.

## Patentansprüche

1. Einrichtung zur Abscheidung von Öl aus Blow-By-Gasen von Verbrennungsmotoren, mittels mehrerer parallel geschalteter Zyklone mit einer gemeinsamen Gaszuführung, wobei Jeder Zyklon an seinem oberen Teilstück eine tangentiale Eintrittsöffnung besitzt, die mit der gemeinsamen Gaszuführung in Verbindung steht, und durch eine Abdeckung abgeschlossen ist, in die ein als Gasauslaß dienendes Tauchrohr eingesetzt ist, wobei über den Tauchrohren der einzelnen Zyklone eine Sammelhaube mit einem Anschlussstutzen angeordnet ist, am unteren Ende eines jeden Zyklons eine Austrittsöffnung für das abzuscheidende Öl vorgesehen ist, die in einen gemeinsamen Sammelraum mit einem an tiefster Stelle angeordneten Anschlussetutzen münden, **dadurch gekennzeichnet, dass** mindestens ein Zyklon (2, 3, 4) mit einem die Gasauslaseöffnung (10b, 10c, 10d) des Tauchrohres (10) abdeckenden, selbsttätigen Ventil (15) ausgerüstet ist, dessen Verschlusselement (15') unter definierter Vorspannung steht und in Abhängigkeit von der Druckdifferenz zwischen dem an seiner Unter- und Oberseite anliegenden Druckes in eine Öffnungs- und Schließstellung bewegbar ist, wobei mit zunehmender Druckdifferenz das Verschlusselement (15') die Gasauslassöffnung (10b, 10c, 10d) zumindest über einen Öffnungsspalt (s) freigibt und den jeweiligen Zyklon (2, 3, 4) zuschaltet und mit abnehmender Druckdifferenz das Verschnsselement (15') wieder in seine Schließstellung zurückbewegbar ist und bei Erreichen der Schließstellung den Jeweiligen Zyklon (2, 3,4) abschaltet.

2. Einrichtung nach Anspruch 1, **dadurch gekennzeichnet, dass** die Tauchrohre (10) aller Zyklone (1, 2, 3, 4) mit einem Ventil (15) ausgerüstet sind und mindestens ein Zyklon (1, 2, 3, 4) ein (15') besitzt, an dem eine geringere Vorspannung anliegt, als an den Verschlusselementen (15') der Ventile (15) der weiteren Zyklone.

3. Einrichtung nach einem der Ansprüche 1 oder 2, **dadurch gekennzeichnet, dass** die Verschlusselemente (15') der Ventile (15) der nacheinander zuschaltbaren Zyklone (1, 2, 3, 4) in der Reihenfolge der Zuschaltung mit einer kontinuierlich steigenden Vorspannung belastet sind.

4. Einrichtung nach einem der Ansprüche 1 bis 3, **dadurch gekennzeichnet, dass** mindestens ein Zyklon (1) angeordnet ist, dessen Gasausiassöffnung (10a) am Tauchrohr (10) nicht abdeckt ist.

5. Einrichtung nach einem der Ansprüche 1 bis 4, **dadurch gekennzeichnet, dass** die Vorspannung der Verschlusselemente (15') so ausgelegt ist, dass bei maximaler Druckdifferenz der Öffnungsspalt (s) des Verschlusselementes (15') in einem Bereich von 10 bis 30% des Durchmessers der Öffnung der Tauchrohre (10) liegt.

6. Einrichtung nach einem der Ansprüche 1 bis 5, **dadurch gekennzeichnet, dass** das Ventil als Klappenventil (15) ausgebildet ist, wobei zur Vorspannung der Klappe (15') an dieser eine einseitig eingespannte Biegefeder (15b,15c,15d) angreift.

7. Einrichtung nach einem der Ansprüche 1 bis 6, **dadurch gekennzeichnet, dass** die Biegefeder (15b, 15c, 15d) als verlängerter Hebelarm der Klappe (15') ausgebildet ist, wobei die Biegefeder (15b, 15c, 15d) und die Klappe (15') als ein Bauteil ausgeführt sind und aus Federblech bestehen.

8. Einrichtung nach einem der Ansprüche 1 bis 7, **dadurch gekennzeichnet, dass** unterschiedliche Vorspannungen der Biegefeder/Hebelarme (15b, 16c, 15d) durch Materialdicke und/oder Länge der Biegefeder und/oder Krümmungsradius der Biegefeder einstellbar sind.

9. Einrichtung nach einem der Ansprüche 1 bis 8, **dadurch gekennzeichnet, dass** an den Abdeckungen (9) der Zyklone (2, 3, 4) eine Halterung (16) angeordnet ist, in der die einzelnen Klappen (15') mit ihrem jeweiligen Hebelarm/Biegefeder (15b, 15c, 15d) eingespannt sind.

10. Einrichtung nach einem der Ansprüche 1 bis 9, **dadurch gekennzeichnet, dass** die einzelnen Zyklone (1, 2, 3, 4) unmittelbar aneinandergrenzend angeordnet sind, und die einzelnen Klappen (15') und Hebelarme (15b, 15c, 15d) zur Abdeckung der Gasaustassöffnungen (10b, 10c, 10d) der Tauchrohre (10) als eine Baueinheit ausgebildet sind, die an der Abdeckung (9) der Zyklone (2, 3, 4) angeordnet ist.

11. Einrichtung nach Anspruch 10, **dadurch gekennzeichnet, dass** die Hebelarme (15b, 15c, 15d) in Abhängigkeit von der vorgegebenen Vorspannung unterschiedliche Längen besitzen.

12. Einrichtung nach einem der Ansprüche 1 bis 11, **dadurch gekennzeichnet, dass** das Tauchrohr (10) die Abdeckung (9) überragt und das Ventil (15) als einteiliges Federblechventil mit einem Befestigungsabschnitt (17) ausgebildet ist, wobei die Verschlusslasche (15') des Ventils (15) durch eine umlaufende Trennfuge (20) gebildet ist, die an der zum Befestigungsabschnitt (17) gegenüberliegenden Seite durch eine biegesteife Verbindungsatelle (21) unterbrochen ist, wodurch zwei symmetrische, die Verschlusslasche (15') umgebende und mit dieser in Verbindung stehende Biegearme (17, 18) gebildet sind, die sich an den Befestigungsabschnitt (17) anschließen, und die beiden Biegearme (17, 18) Im montierten Zustand des Ventils mit einem positiven und einem negativen Biegemoment beaufschlagt sind, derart, dass bei anliegendem Öffnungsdruck auf die Verschlusslasche (15') diese durch eine nahezu parallele Bewegung abhebt und die Biegearme (17, 18) eine synchrone Schwenkbewegung ausführen.

13. Einrichtung nach Anspruch 12, **dadurch gekennzeichnet, dass** das Ventil als Mehrfachventil ausgebildet ist, wobei die Biegearme 17,18) der einzelnen Ventile (15) einen gemeinsamen Befestigungsabschnitt (17) besitzen.

## Claims

1. A device for separating oil from blow-by gases of internal combustion engines by means of several cyclones connected in parallel and having a common gas supply, wherein each cyclone has at its upper part a tangential inlet opening that communicates with the common gas supply and is closed by a cover into which an immersion pipe serving as a gas outlet is inserted, wherein a collecting hood with a connecting socket is arranged above the immersion pipes of the individual cyclones, at the lower end of each cyclone an outlet opening for the oil to be separated is provided and enters into a common collecting chamber with a connecting socket provided in the lowest position, **characterized in that** at least one cyclone (2, 3, 4) is equipped with an automatic valve (15) covering the gas outlet opening (10b, 10c, 10d) of the immersion pipe (10), the closing element (15') of the valve being under a defined bias and being movable into open and closed positions depending on the pressure difference between the pressures prevailing on its upper and lower sides, wherein, as the pressure difference increases, the closing element (15') exposes the gas outlet opening (10b, 10c, 10d) at least through an opening gap (s) and switches the respective cyclone (2, 3, 4) in, and as the pressure difference decreases, the closing element (15') can be returned to its closed position and switches the respective cyclone (2, 3, 4) off when it reaches the closed position.

2. The device according to claim 1, **characterized in that** said immersion pipes (10) of all cyclones (1, 2, 3, 4) are equipped with a valve (15), and at least one cyclone (1, 2, 3, 4) has a closing element (15') at which a lower bias is applied as compared to the closing elements (15') of the valves (15) of the other cyclones.

3. The device according to either of claims 1 or 2, **characterized in that** said closing elements (15') of the valves (15) of the cyclones (1, 2, 3, 4) that can be successively switched in are loaded with a continuously increasing bias in the order of being switched in.

4. The device according to any of claims 1 to 3, **characterized in that** at least one cyclone (1) whose gas outlet opening (10a) is not covered at the immersion pipe (10) is provided.

5. The device according to any of claims 1 to 4, **characterized in that** the bias of the closing elements (15') is adjusted in such a way that, for a maximum pressure difference, the opening gap (s) of the closing element (15') is within a range from 10 to 30% of the diameter of the opening of the immersion pipe (10).

6. The device according to any of claims 1 to 5, **characterized in that** the valve is designed as a flap valve (15), wherein a bending spring (15b, 15c, 15d) clamped on one side thereof engages the flap (15') to provide a bias at the flap.

7. The device according to any of claims 1 to 6, **characterized in that** said bending spring (15b, 15c, 15d) is designed as an extended lever arm of the flap (15'), wherein said bending spring (15b, 15c, 15d) and said flap (15') are designed as a single piece and consist of a spring steel plate.

8. The device according to any of claims 1 to 7, **characterized in that** different biases of the bending spring/lever arms (15b, 15c, 15d) can be adjusted by means of the material thickness and/or the length of the bending spring and/or the radius of curvature of the bending spring.

9. The device according to any of claims 1 to 8, **characterized in that** a holding device (16) is provided at the covers (9) of the cyclones (2, 3, 4), in which the individual flaps (15') are clamped by their respective lever arms/bending springs (15b, 15c, 15d).

10. The device according to any of claims 1 to 9, **characterized in that** the individual cyclones (1, 2, 3, 4) are arranged to be directly adjacent to each other, and the individual flaps (15') and lever arms (15b, 15c, 15d) for covering the gas outlet openings (10b, 10c, 10d) of the immersion pipes (10) are designed as one unit provided at the cover (9) of the cyclone (2, 3, 4).

11. The device according to claim 10, **characterized in that** said lever arms (15b, 15c, 15d) have different lengths depending on the preset bias.

12. The device according to any of claims 1 to 11, **characterized in that** said immersion pipe (10) extends beyond the cover (9), and said valve (15) is designed as a one-part spring steel plate valve with an attachment section (17), wherein the closing flap (15') of the valve (15) is formed by a circumferential parting line (20) interrupted on the side opposing said attachment section (17) by a connecting site (21) having bending stiffness, to form two symmetrical bending arms (17, 18) surrounding the closing flap (15') and connected with the latter that are connected with the attachment section (17), and in the mounted state of the valve the two bending arms (17, 18) are applied with a positive and a negative bending torque, so that, when an opening pressure is applied to the closing flap (15'), the latter is lifted off with an almost parallel movement, and the bending arms (17, 18) perform a synchronous pivoting motion.

13. The device according to claim 12, **characterized in that** said valve is designed as a multivalve, the bending arms (17, 18) of the individual valves (15) sharing a common attachment section (17).

## Revendications

1. Dispositif pour séparer de l'huile des gaz de fuite provenant des moteurs à combustion interne au moyen de plusieurs séparateurs à cyclone connectés en parallèle et ayant une conduite d'alimentation de gaz commune, chaque séparateur à cyclone ayant une ouverture d'entrée tangentielle à sa partie supérieure, ouverture communiquant avec la conduite d'alimentation de gaz commune et étant fermée par un couvercle dans lequel un tube d'immersion servant de sortie de gaz est inséré, dans lequel une hotte de collecte avec une tubulure est arrangée au-dessus des tubes d'immersion des séparateurs à cyclone individuels, une ouverture de sortie pour l'huile à séparer étant procurée à l'extrémité inférieure de chaque séparateur à cyclone, les ouvertures de sortie débouchant dans une chambre collectrice commune avec une tubulure procurée dans la position la plus basse, **caractérisé en ce qu'**au moins un séparateur à cyclone (2, 3, 4) est muni d'une vanne automatique (15) couvrant l'ouverture de sortie des gaz (10b, 10c, 10d) du tube d'immersion (10), l'élément de fermeture (15') de ladite vanne étant soumise à une précontrainte définie est pouvant être déplacé dans des positions ouverte et fermée selon la différence des pressions entre les pressions régnant sur ses côtés inférieur et supérieur, dans lequel l'élément de fermeture (15') expose l'ouverture de sortie des gaz (10b, 10c, 10d) au moins par une fente d'ouverture (s) et met le séparateur à cyclone respectif (2, 3, 4) en circuit, lorsque la différence des pressions augmente, et l'élément de fermeture (15') peut être replacé dans sa position fermée et met le séparateur à cyclone respectif (2, 3, 4) hors circuit quand il atteint sa position fermée, lorsque la différence des pressions est réduite.

2. Dispositif selon la revendication 1, **caractérisé en ce que** les tubes d'immersion (10) de tous les séparateurs à cyclone (1, 2, 3, 4) sont munis d'une vanne (15), et qu'au moins un séparateur à cyclone (1, 2, 3, 4) possède un élément de fermeture (15') soumis à une précontrainte inférieure à celle des éléments de fermeture (15') des vannes (15) des autres séparateurs à cyclone.

3. Dispositif selon l'une quelconque des revendications 1 ou 2, **caractérisé en ce que** les éléments de fermeture (15') des vannes (15) des séparateurs à cyclone (1, 2, 3, 4) pouvant être mis en circuit l'un après l'autre sont soumis à des précontraintes augmentant de façon continue dans l'ordre de la mise en circuit.

4. Dispositif selon l'une quelconque des revendications 1 à 3, **caractérisé en ce qu'**au moins un séparateur à cyclone (1) est présent dont l'ouverture de sortie des gaz (10a) dans le tube d'immersion (10) n'est pas couverte.

5. Dispositif selon l'une quelconque des revendications 1 à 4, **caractérisé en ce que** la précontrainte des éléments de fermeture (15') est telle que lorsque la différence des pressions est maximale, la fente d'ouverture (s) de l'élément de fermeture (15') est comprise entre 10 et 30 % du diamètre de l'ouverture du tube d'immersion (10).

6. Dispositif selon l'une quelconque des revendications 1 à 5, **caractérisé en ce que** la vanne a été conçue comme clapet à battant (15), un ressort de cintrage (15b, 15c, 15d) serré d'un côté s'appliquant au battant (15') pour le soumettre à une précontrainte.

7. Dispositif selon l'une quelconque des revendications 1 à 6, **caractérisé en ce que** le ressort de cintrage (15b, 15c, 15d) a été conçu comme bras de levier prolongé du battant (15'), le ressort de cintrage (15b, 15c, 15d) et le battant (15') étant conçus comme une pièce intégrale et consistant en tôle pour ressorts.

8. Dispositif selon l'une quelconque des revendications 1 à 7, **caractérisé en ce que** des précontraintes différentes des ressorts de cintrage/bras de levier (15b, 15c, 15d) peuvent être adaptées par l'épaisseur du matériau et/ou la longueur du ressort de cintrage et/ou le rayon de courbure du ressort de cintrage.

9. Dispositif selon l'une quelconque des revendications 1 à 8, **caractérisé en ce que** les couvercles (9) des séparateurs à cyclone (2, 3, 4) portent un serrage (16) dans lequel les battants (15') individuels sont serrés au niveau de leurs ressorts de cintrage/bras de levier (15b, 15c, 15d) respectifs.

10. Dispositif selon l'une quelconque des revendications 1 à 9, **caractérisé en ce que** les séparateurs à cyclone (1, 2, 3, 4) individuels sont directement adjacents l'un à l'autre, et que les battants (15') et bras de levier (15b, 15c, 15d) individuels pour couvrir les ouvertures de sortie des gaz (10b, 10c, 10d) dans les tubes d'immersion (10) sont conçus comme une pièce intégrale arrangée au couvercle (9) des séparateurs à cyclone (2, 3, 4).

11. Dispositif selon la revendication 10, **caractérisé en ce que** les bras de levier (15b, 15c, 15d) ont des longueurs différentes selon la précontrainte prédéfinie.

12. Dispositif selon l'une quelconque des revendications 1 à 11, **caractérisé en ce que** le tube d'immersion (10) va au-delà du couvercle (9), et que la vanne (15) a été conçue comme vanne en tôle pour ressorts constituée d'une seule pièce et ayant une partie de fixation (17), le volet à fermeture (15') de la vanne (15) étant formé par une fente de séparation circonférentielle (20) interrompue par une zone de liaison (21) rigide à la flexion au côté opposé à la partie de fixation (17), pour former deux bras flexibles (17, 18) symétriques entourant le volet à fermeture (15') et y étant reliés, suivant la partie de fixation (17), et les deux bras flexibles (17, 18) étant soumis à un couple de flexion positif et négatif dans l'état monté de la vanne, de manière que quand une pression d'ouverture s'applique au volet à fermeture (15'), le dernier se retire par un mouvement presque parallèle et les bras flexibles (17, 18) fassent un mouvement pivotant synchronique.

13. Dispositif selon la revendication 12, **caractérisé en ce que** la vanne a été conçue comme multivanne, les bras flexibles (17, 18) des vannes (15) individuelles ayant une partie de fixation (17) commune.
